# EUROPEAN PATENT SPECIFICATION

(11) **EP 2 287 746 B1**
(45) Date of publication and mention of the grant of the patent: **05.04.2017**
(21) Application number: 10168804.2
(22) Date of filing: 08.07.2010
(51) Int. Cl.: G06F 13/10, G06F 9/50, G06F 3/12

(54) **COMMUNICATION CONTROL METHOD, CONTROL PROGRAM, AND COMMUNICATION CONTROL SYSTEM**
KOMMUNIKATIONSSTEUERUNGSVERFAHREN, STEUERUNGSPROGRAMM UND KOMMUNIKATIONSSTEUERUNGSSYSTEM
PROCÉDÉ DE CONTRÔLE DES COMMUNICATIONS, PROGRAMME DE CONTRÔLE ET SYSTÈME DE CONTRÔLE DES COMMUNICATIONS

(30) Priority: 17.07.2009 JP 2009169166
(43) Date of publication of application: 23.02.2011
(73) Proprietor: Seiko Epson Corporation, Shinjuku-ku Tokyo 160-0811 (JP)
(72) Inventor: Nishimura, Kumi, Nagano 392-8502 (JP); Nakazawa, Masatoshi, Nagano 392-8502 (JP)
(74) Representative: MERH-IP Matias Erny Reichl Hoffmann Patentanwälte PartG mbB

(56) References cited:
- US-A- 5 628 030
- US-A1- 2005 204 366

## Description

### BACKGROUND

### 1. Technical Field

The present invention relates to a communication control method, a control,program, and a communication control system, and relates more particularly to a communication control method, a control program, and a communication control system that enable an application program that is compatible with a specific communication interface to connect to another communication interface that is different from the specific communication interface.

### 2. Related Art

In order to use various peripheral devices that are accessible through the operating system, application programs typically incorporate various device drivers, which are software modules for controlling particular peripheral devices. See, for example, Japanese Unexamined Patent Appl. Pub. JP-A-2008-158785.

The device driver is software for handling input and output between an application program and a particular device, and controls input/output devices (hardware such as expansion cards and peripheral devices) such as graphic display devices, printers, and Ethernet (R) boards.

Configurations and methods that communicate with a communication port (a physical port) through a virtual port driver that primarily handles control of the communication protocol are also used in order to efficiently produce and use device drivers. In a communication environment having a plurality of virtual port drivers that all use the same physical communication port, competition occurs as a result of plural virtual port drivers attempting to use the same communication port at the same time, or the times when the virtual port drivers attempt to use the communication port may overlap.

Depending upon the type or design of the virtual port driver, the virtual port driver may also continue to occupy the communication port to which it is connected once it secures a connection to the communication port.

An example of this type of virtual port driver is, more specifically, a virtual port driver that constantly checks the connection status once communication is established. This type of virtual port driver does not release the communication port because it must constantly determine if the controlled device is connected to the communication port to which the virtual port driver is connected.

Therefore, if one virtual port driver is thus occupying the communication port and a second virtual port driver attempts to use the same communication port, the second virtual port driver will not be able to use the communication port. This means that a device driver (application program) that connects to the communication port through the second virtual port driver will not be able to use the communication port.

US 5,628,030 A shows a virtual modem device for connecting to a plurality of active communication applications in an environment wherein communication applications utilize a communications driver when talking to an actual modem attached to the system. The virtual modem device selectively connects the communication applications to an actual modem, handles and connects incoming calls to the appropriate communication application, and provides for direct connection capability. A software communications driver and a master communications application are provided to control the driver connectivity to fool each communication application into thinking that it is connected to the actual modem. The virtual modem is implemented by creating a communications driver in software that emulates a modem in idle mode (e.g., when it is not off-hook and in command mode) and is utilized for each communication application that is connected to a communication port designated as a virtual modem.

US 2005/204366 A1 shows an I/O adapter sharing, mechanism in a logically partitioned computer system which allows sharing a network I/O adapter between logical partitions. A first logical partition owns (or controls) the I/O adapter, and a second logical partition desires to use (or share) the I/O adapter. An I/O adapter device driver that includes a hardware interface is provided in the first logical partition. A virtual device driver is provided in the second logical partition that provides a set of functions that is at least partially defined by querying the I/O adapter device driver in the first logical partition. The I/O adapter sharing mechanism includes a transfer mechanism that allows data to be transferred directly from the virtual device driver in the second logical partition to the I/O adapter without passing through the I/O adapter device driver in the first logical partition.

### SUMMARY

In a communication environment in which a plurality of virtual port drivers use a single communication port and there is a virtual port driver occupying the communication port, a communication control method, a control program, and a communication control system according to the present invention enable a virtual port driver other than another virtual port driver that is occupying the communication port to use the communication port and communicate.

According to the present invention, there is proposed a communication control method according to claim 1, a control program according to claim 4, a communication control system according to claim 6, and a POS system according to claim 10. Dependent claims relate to preferred embodiments of the present invention.

A first aspect of the invention is a communication control method for a control device that has a plurality of device driver means and a plurality of virtual port driver means that use a same first communication port, each of the device driver means corresponding to one of the virtual port driver means, respectively (in particular, each of the device driver means addressing one of the virtual port driver means, respectively), and the control device being configured to communicate with a controlled device through the virtual port driver means and the first communication port, the communication control method having: a step of executing a communication process in which a first virtual port driver means emulates a driver for a specific communication port (which may be a different communication port from the first communication port and, in particular, which may require a different driver means and/or communication protocol) in communication between itself and the device driver
means to which it corresponds (in particular the device driver means that addresses itself); and when at least a second virtual port driver means occupies the first communication port, a step of executing a communication process in which the first virtual port driver means emulates, in communication between itself and the second virtual port driver means, the specific device driver means to which the second virtual port driver means corresponds.

A communication control method according to another aspect of the invention has a step of executing a communication process in which the first virtual port driver means has a virtual port communication module means that corresponds to the second virtual port driver means and emulates the specific device driver means corresponding to the second virtual port driver means through the virtual port communication module means.

In this aspect of the invention, the first virtual port driver means executes a communication process by emulating a specific communication port in communication with the device driver means to which the first virtual port driver means corresponds, and at least when a second virtual port driver means occupies that first communication port, executes a communication process in which the same first virtual port driver means emulates, in communication between the first virtual port driver means and the second virtual port driver means occupying the first communication port, the specific device driver means to which the second virtual port driver corresponds.

The device driver corresponding to the first virtual port driver means, or more particularly the application that uses this device driver means corresponding to the first virtual port driver means to communicate through the first communication port with the controlled device, can communicate through the first communication port without being affected by whether or not the second virtual port driver means already occupies the communication port.

The communication control method according to another aspect of the invention further preferably has a step of processing a communication request from the first virtual port driver means to the first communication port; and a step of executing a communication process that, when a response permitting communication through the first communication port is not received in response to the communication request process, determines that the second virtual port driver means occupies the first communication port and emulates the specific device driver means to which the second virtual port driver means corresponds.

When the first virtual port driver means sends a communication request to the first communication port and then does not receive a response permitting communication through the first communication port, according to this preferred aspect of the invention, it is determined that a second virtual port driver means is occupying the first communication port and therefore the first virtual port driver means goes to a communication process in which it emulates the specific device driver means corresponding to that second virtual port driver means. As a result, the application, or more particularly the user, can execute the communication process to communicate with a particular device without knowing whether or not the first communication port is occupied.

Another aspect of the invention is a control program for controlling by means of a computer a control device that has a plurality of device driver means and a plurality of virtual port driver means that use a same first communication port, each of the device driver means corresponding to one of the virtual port driver means, respectively, and the control device being configured to communicate with a controlled device through the virtual port driver means and the first communication port, the control program causing the computer to function as: a means of causing a first virtual port driver means to execute a communication process in which the first virtual port driver emulates a specific communication port in communication with the device driver means to which the first virtual port driver means corresponds; and when at least a second virtual port driver means occupies the first communication port, a means of executing a communication process in which the first virtual port driver means emulates in communication with the second virtual port driver means the specific device driver means to which the second virtual port driver means corresponds.

In a control program according to another aspect of the invention, the control program causes the computer to operate as a means of executing a communication process wherein the one virtual port driver has a communication module that corresponds to the other virtual port driver, and emulates the specific device driver through the communication module.

With this aspect of the invention, the device driver means corresponding to the first virtual port driver means, or more particularly the application that uses this device driver means to communicate through the first communication port, can communicate through the first communication port without being affected by whether or not the second virtual port driver means occupies the communication port.

According to yet another aspect of the invention, a communication control system for controlling communication of a control device being configured to communicate with a controlled device through a plurality of virtual port driver means and a first communication port is proposed. The communication control system comprises a plurality of device driver means, and a plurality of virtual port driver means that use the same first communication port, wherein each of the plurality of device driver means corresponds to one of the plurality of virtual port driver means, respectively, wherein a first virtual port driver means is configured to emulate a specific second communication port in communication with the device driver means to which it corresponds; and wherein the first virtual port driver means is further configured to emulate in communication with the second virtual port driver means the specific device driver means to which the second virtual port driver means corresponds, when at least the second virtual port driver means occupies the first communication port.

Preferably, the first virtual port driver means comprises a virtual port communication module means for communicating with the second virtual port driver means and for emulating the specific device driver means corresponding to the second virtual port driver means through the virtual port communication module means in communication with the second virtual port driver means.

Preferably, the first virtual port driver means is configured to process a communication request to the communication port; and the first virtual port driver means is configured to determine that the second virtual port driver occupies the communication port, when a response permitting communication through the communication port is not received in response to the communication request process, and to emulate the specific device driver means to which the second virtual port driver means corresponds.

Preferably, the control device is a POS terminal and the controlled device is a printer. Accordingly, there is further proposed a POS system comprising a POS terminal and a printer, wherein the printer is connected to the POS terminal through a first communication port of the POS terminal, and wherein the POS terminal comprises a communication control system according to one of the above-described aspects or preferred aspects of the present invention, the POS terminal being the control device and the printer being the controlled device.

### * Effect of the invention

In a communication environment in which there is a plurality of virtual port drivers that use a single communication port and there is a virtual port driver occupying the communication port, the communication control method and control program of the invention enable a virtual port driver other than another virtual port driver that is occupying the communication port to communicate through the occupied communication port.

Therefore, when a plurality of virtual port drivers use a same communication port, the application program can communicate through the same communication port regardless of which device driver using any of the virtual port drivers is used.

Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a block diagram exemplarily showing the configuration of a POS system according to a preferred embodiment of the invention.
FIG. 2 is a block diagram exemplarily showing the configuration of a POS terminal device.
FIG. 3 is an exemplary function block diagram of the communication control system of the POS terminal device.
FIG. 4 exemplarily illustrates the configuration of the device driver DD1 and virtual port driver VPD1 in detail.
FIG. 5 exemplarily illustrates the configuration of a virtual port driver VPD2.
FIG. 6 is an exemplary sequence flow chart of the printing process in a preferred embodiment of the invention.

### DESCRIPTION OF EMBODIMENTS

A preferred embodiment of the present invention is described below with reference to the accompanying figures.

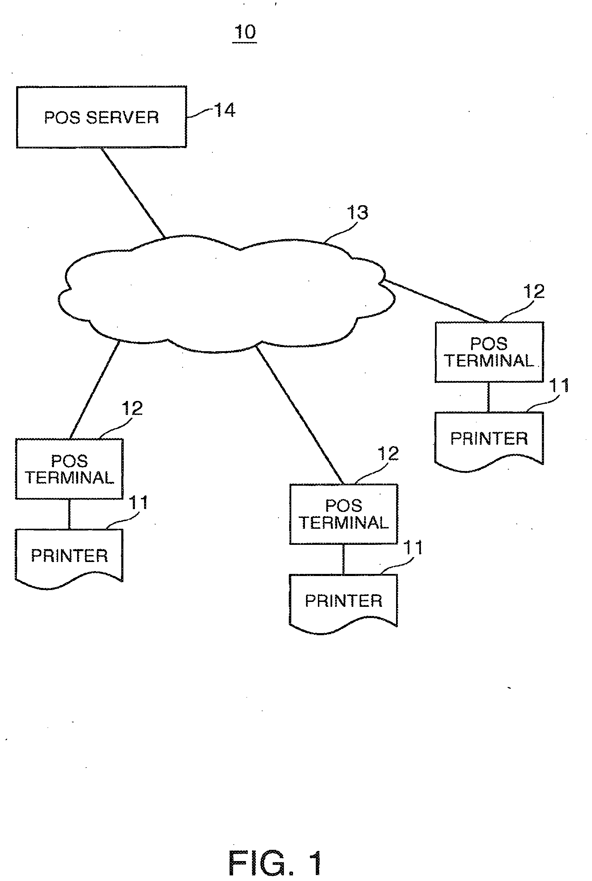

FIG. 1 is a block diagram exemplarily showing the configuration of a POS system according to a preferred embodiment of the invention.

The POS system 10 (POS for Point-Of-Sale) is a sales management system typically used in retail stores such as supermarkets. A POS system 10 generally has a plurality of POS terminals 12 each with a printer 11 connected thereto for printing receipts and/or coupons, for example, and a POS server 14 connected to the plural POS terminals 12 over the Internet or other communication network 13 such as Ethernet (R), LAN, WLAN or other known communication networks. The POS server 14 administers the plural POS terminals 12 and manages data such as sales data collected from the POS terminals 12.

Note that in this embodiment of the invention the printers 11 function as controlled devices, and the POS terminals 12 function as control devices that control the controlled devices.

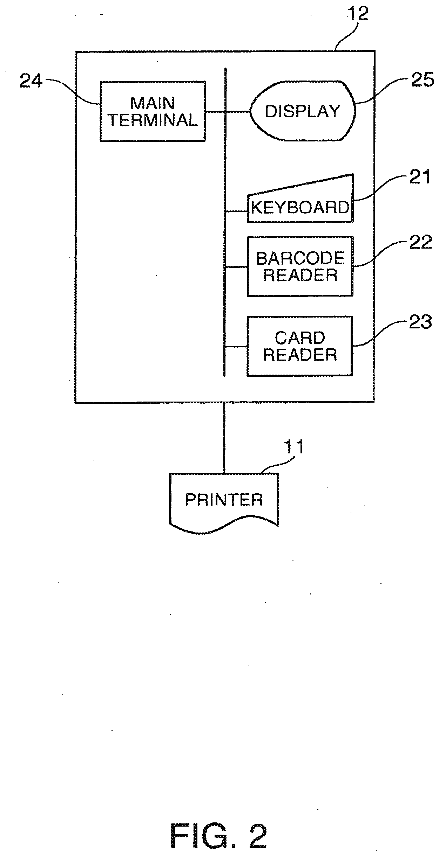

FIG. 2 is an exemplary schematic block diagram of a POS terminal 12.

The POS terminal 12 has a keyboard 21, a barcode reader 22, a card reader 23, a main terminal 24, and a display 25. The keyboard 21 can be used by the operator to manually input information such as e.g. product information such as e.g. product information relating to the price, product code, and/or discount rate, and/or customer information such as age and sex, and/or other information.

The barcode reader 22 is adapted to be used to read the barcode affixed to each product and thereby automatically input information such as e.g. product information such as e.g. product information relating to the price, product code, and/or discount rate. The card reader 23 is adapted to be used to read information stored on a card such as e.g. customer credit cards or membership cards, for example, and to capture information needed to process credit card transactions and customer information such as membership number. The information stored on the card can be stored by means of data chips, magnetic strips or the like.

The main terminal 24 generates information for printing receipts and/or coupons based on product data sent from the POS server 14 and information input from the keyboard 21, barcode reader 22, or card reader 23, and outputs the print data to the printer 11. The display 25 displays product information generated based on the product data sent from the POS server 14, and displays the product name and price information, for example, for the customer.

In this embodiment of the invention, the main terminal 24 is rendered by a computer having, for example, a MPU, ROM, and RAM not shown, and controls operation based on a control program stored in ROM.

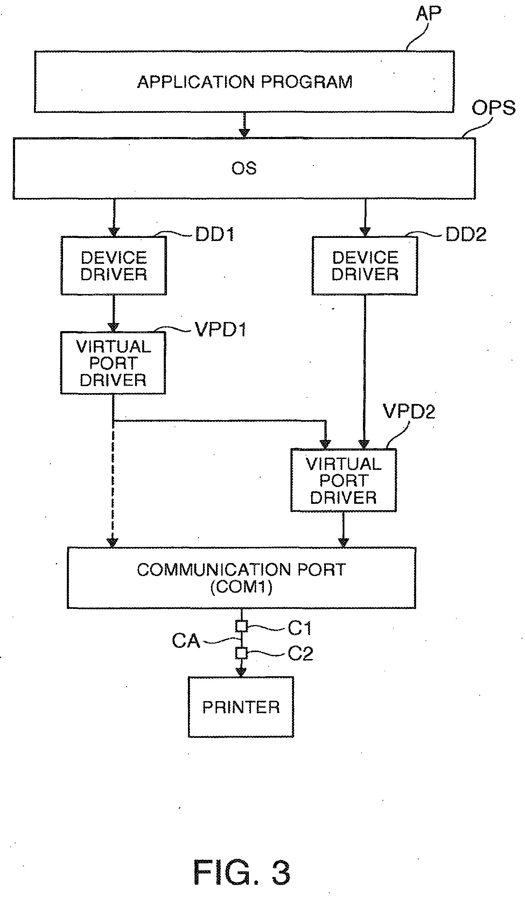

The printer 11 and POS terminal 12 are connected through connectors C1 and C2 and a communication cable CA (see FIG. 3).

The POS server 14 is rendered by a computer having an MPU, ROM, RAM, hard disk drive storing a database, and other components not shown.

FIG. 3 is an exemplary function block diagram of the communication control system of the POS terminal 12.

When an application program AP (such as a POS terminal control program) that runs under the operating system (OS) OPS of the POS terminal 12 is designed, the specific type of printer 11 that may be connected as a peripheral device to the POS terminal 12 may be unknown. As a result, when the printer 11 is actually connected, a device driver DD1 corresponding to the protocol used to control the printer 11 may also be installed.

However, when the device driver DD1 has a function for controlling the actual communication port (a physical port such as a LPT port, COM1, or USB port), the communication port with which it can communicate is identified uniquely and cannot be easily changed.

As a result, when the device driver DD1 is installed to a system that does not have a communication port that is compatible with the device driver DD1, a virtual port driver VPD1 is installed between the device driver DD1 and the communication port. The virtual port driver VPD1 then converts the protocol used by the device driver DD1 to communicate with the communication port to the protocol used by the communication port to which the peripheral device is actually connected.

In addition, writing and using the device driver is more efficient if the protocol portion corresponding to the communication port is extracted as a virtual port driver because it can be shared between different types of devices and communication ports. In addition, communication between the device driver and the virtual port driver is possible using a simple communication protocol, which can be easily changed. Conversion is also possible if a different communication protocol is set.

For example, when the communication port used by the device driver DD1 is the LPT port and the communication port to which the printer 11 is actually connected is communication port COM1, the virtual port driver VPD1 converts the protocol of the LPT port to the protocol compatible with the COM port. More specifically, the virtual port driver VPD1 emulates the LPT port for the device driver DD1, emulates a device driver compatible with communication port COM1 for communication through the communication port COM1, and thereby enables the device driver DD1 to control the printer 11 through the COM port.

Emulating the LPT port (communication port) as used herein means handling the input and output of high and low level digital signals so that it appears to the communicating device (device driver DD1 in the foregoing example) that it is communicating directly with the LPT port. Emulating a device driver similarly means handling the sending and receiving of data (including both commands and data) so that the communicating device (communication port COM1 in the foregoing example) appears to be actually exchanging data with the device driver. Other emulation operations noted below operate in the same way.

If a different type of printer or other peripheral device was connected to the communication port before the device driver DD1 was installed, a device driver DD2 for that other type of printer or peripheral device may have also been previously installed.

Because the device driver DD2 in this configuration controls a specific communication port, the communication port with which it can communicate is fixed and cannot be easily changed. Therefore, in order to convert the protocol of the communication port with which device driver DD2 communicates to the protocol used by the communication port to which the peripheral device is actually connected, a virtual port driver VPD2 may be installed between the device driver DD2 and the communication port. In other words, the virtual port driver VPD2 emulates the communication port used by the device driver DD2 for the device driver DD2, emulates the device driver that communicates with communication port COM1 for the communication port COM1, and thereby enables the device driver DD1 to control the printer 11 through communication port COM1.

In this situation the virtual port driver VPD2 may occupy communication port COM1.

This can happen, for example, because the virtual port driver VPD2 must constantly monitor whether or not the controlled device is connected to the communication port.

When the communication port COM1 is thus occupied, a virtual port driver VPD1 that is subsequently installed cannot access communication port COM1 and therefore cannot communicate through communication port COM1. As a result, the device driver DD1 that uses the virtual port driver VPD1, that is, the application program AP, cannot function.

Therefore, if a virtual port driver VPD2 that occupies the communication port is already present when another virtual port driver VPD1 is installed in this embodiment of the invention, this other virtual port driver VPD1 is configured to operate by communicating with the desired communication port through virtual port driver VPD2.

More specifically, when the virtual port driver VPD2 is adapted to convert the protocol compatible with device driver DD2 to the protocol compatible with the occupied communication port, the virtual port driver VPD1 operates to convert the protocol of the device driver DD1 to the protocol of the device driver DD2. As a result, the virtual port driver VPD2 can convert the protocol compatible with device driver DD2 received via the virtual port driver VPD1 to the protocol compatible with the occupied communication port.

Yet more specifically, virtual port driver VPD1 emulates the communication port COM1 for device driver DD1, and emulates the device driver DD2 that is compatible with the communication port COM1 for virtual port driver VPD2. As a result, the device driver DD1 can control the printer 11 through communication port COM1.

As a result, virtual port driver VPD1 appears identical to device driver DD2 from the perspective of virtual port driver VPD2, and the application program AP can control the printer 11 through the communication port whether or not virtual port driver VPD2 occupies the communication port.

The operation of the device driver and the virtual port driver are described in greater detail below.

The virtual port driver VPD1 described below is configured to communicate through the communication port COM1 under the control of the driver control module 31 of the device driver DD1.

When the application program AP outputs a communication request, the driver control module 31 of the device driver DD1 sends a communication request using its own communication protocol to the virtual port driver VPD1.

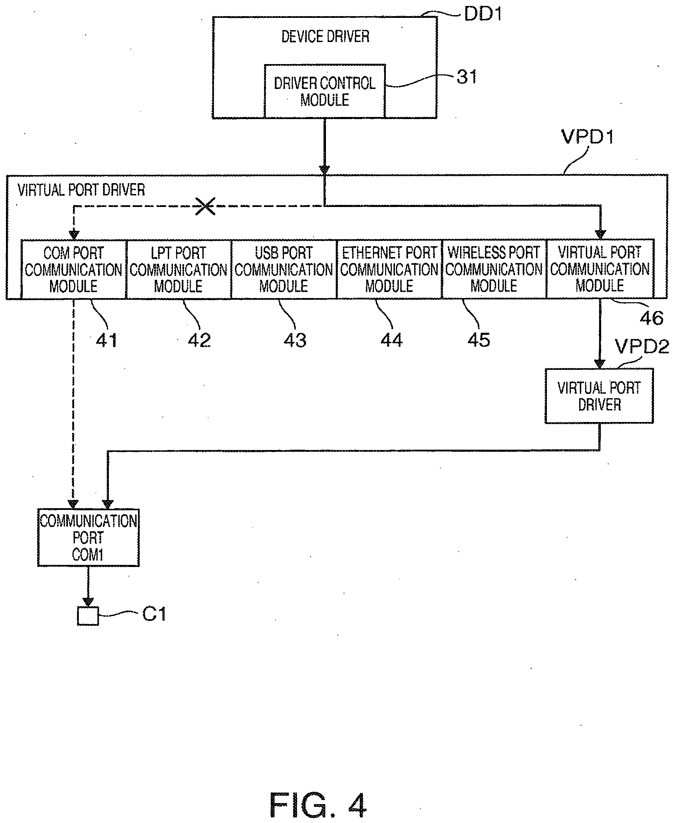

As a result, the virtual port driver VPD1 emulates a communication port based on the communication protocol used by the driver control module 31 (cf. e.g. FIG. 4) of the device driver DD1.

FIG. 4 exemplarily illustrates the configuration of the device driver DD1 and the virtual port driver VPD1.

The virtual port driver VPD1 has the following modules as shown in FIG. 4 (According to other embodiments, the virtual port driver VPD1 can have one or more of the following modules, e.g. the Virtual port communication module 46 and at least one of the COM, LPT, USB, Ethernet (R) and wireless port communication modules).
1. COM port communication module 41 that can communicate with serial communication ports (COM1, COM2, and so forth)
2. LPT port communication module 42 that can communicate with parallel communication ports LPT (LPT1, LPT2, and so forth)
3. USB port communication module 43 that can communicate with Universal Serial Bus (USB) communication ports USB (USB1, USB2, and so forth)
4. Ethernet (R) port communication module 44 that can communicate with an Ethernet (R) port conforming to a wired LAN communication standard
5. Wireless port communication module 45 that can communicate with a wireless communication port conforming to a wireless LAN communication standard
6. Virtual port communication module 46 that emulates the device driver DD2 used by the virtual port driver VPD2 for the virtual port driver VPD2

Note that because the virtual port driver VPD1 is configured to communicate through communication port COM1 with the driver control module of the device driver DD1, the virtual port driver VPD1 should preferably communicate through the COM port communication module 41 as indicated by the dotted line arrow in FIG. 4.

However, when communication port COM1 is occupied by the virtual port driver VPD2 as described above, the virtual port driver VPD1 is adapted to simulate and send a communicate request through the virtual port communication module 46 to the virtual port driver VPD2 as indicated by the solid line arrow in FIG. 4 to emulate a driver control module (not shown) of the device driver DD2.

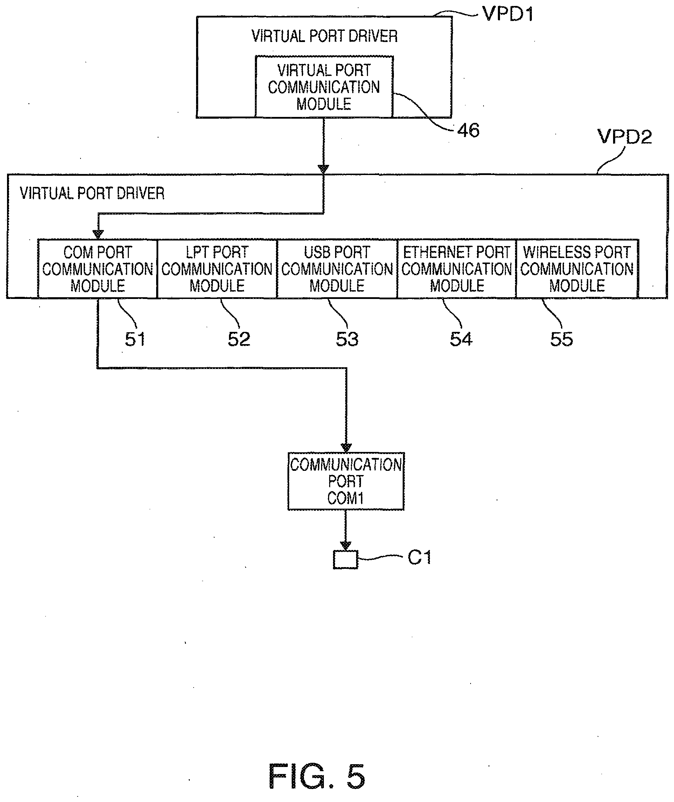

FIG. 5 exemplarily shows the configuration of the virtual port driver VPD2 in detail.

As shown in FIG. 5 the virtual port driver VPD2 has the following modules (According to other embodiments, the virtual port driver VPD2 can have one or more of the following modules e.g. at least one of the COM, LPT, USB, Ethernet (R) and wireless port communication modules).
1. COM port communication module 51 that can communicate with serial communication ports (COM1, COM2, and so forth)
2. LPT port communication module 52 that can communicate with parallel communication ports LPT (LPT1, LPT2, and so forth)
3. USB port communication module 53 that can communicate with Universal Serial Bus (USB) communication ports USB (USB1, USB2, and so forth)
4. Ethernet (R) port communication module 54 that can communicate with an Ethernet (R) port conforming to a wired LAN communication standard
5. Wireless port communication module 55 that can communicate with a wireless communication port conforming to a wireless LAN communication standard

Because the virtual port driver VPD2 is configured to communicate through the communication port COM1 with the driver control module (not shown) of the device driver DD2, the virtual port driver VPD2 communicates through the COM port communication module 51 and communication port COM1 as shown by the solid line arrow in FIG. 5 so that the device driver DD1 can communicate with the printer 11.

A specific communication control process is described next using by way of example printing by means of a printer connected to a COM port.

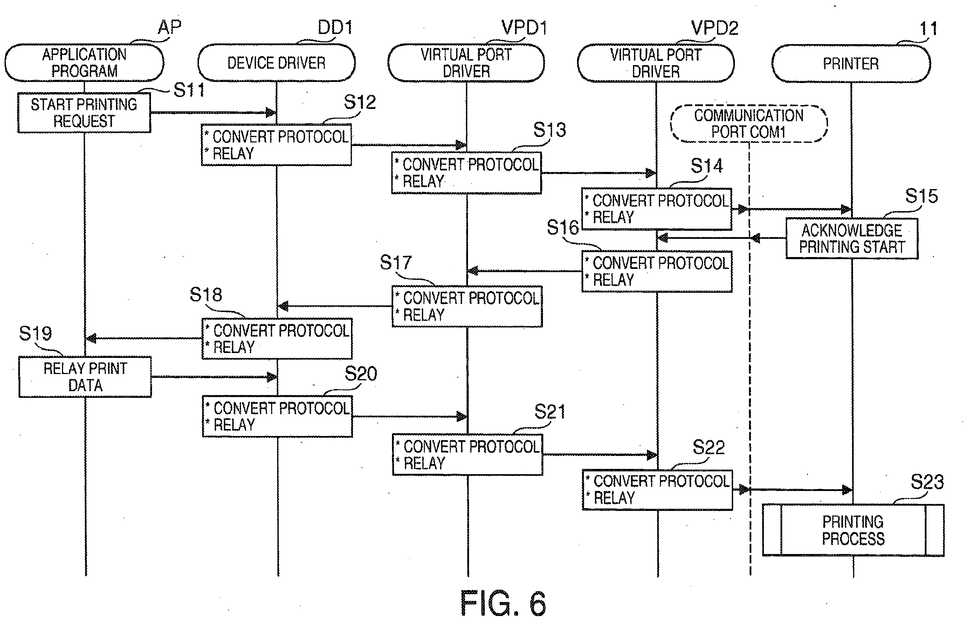

FIG. 6 is a flow chart of the communication sequence in this embodiment of the invention when printing.

The device driver DD1 of an application program AP that runs on the POS terminal 12 first converts the start printing request of the application program AP (step S11) to the protocol of the communication port addressed by the application program (such as the LPT port in this example), and relays the start printing request to the virtual port driver VPD1 (step S12).

The virtual port driver VPD1 to which the start printing request was relayed functions identically to the actual device driver DD2 that corresponds to the virtual port driver VPD2. That is, the virtual port driver VPD1 converts the relayed start printing request to the protocol of the communication port used by the device driver DD2 (the USB port in this example), and relays the request through the virtual port communication module 46 to the virtual port driver VPD2 (step S13). Therefore, the virtual port driver VPD1 emulates the communication port addressed by the device driver DD1 for the device driver DD1, and emulates the device driver DD2 for the virtual port driver VPD2 e.g. as described above with reference to Fig. 3.

The virtual port driver VPD2 then converts the relayed start printing request to the communication protocol for communicating through the COM port communication module with the communication port COM1, and outputs the result to the communication port COM1. As a result, the start printing request is applied to the printer 11 through the communication port COM1, connector C1, communication cable, and connector C2 (step S14). That is, the virtual port driver VPD2 emulates communication port COM1 for virtual port driver VPD1, and emulates device driver DD2 for communication port COM1.

If the printer 11 that received the start printing request can receive print data, it sends a print start acknowledgement to the communication port COM1 of the POS terminal 12 through connector C2, the communication cable, and connector C1 (step S15).

The virtual port driver VPD2 receives the print start acknowledgement through the communication port COM1, converts the communication protocol of the communication port COM1 to the communication protocol of the virtual port driver VPD1, and relays the acknowledgement to the virtual port driver VPD1 (step S16). More specifically, the virtual port driver VPD2 emulates the device driver DD2 for the communication port COM1, and emulates the communication port COM1 for the device driver DD1.

As a result, the virtual port driver VPD1 that received the print start acknowledgement from the communication port COM1 by means of emulation converts the communication protocol to the communication protocol of the device driver DD1 and relays the acknowledgement to the device driver DD1 (step S17). In other words, the virtual port driver VPD1 emulates the device driver DD2 for the virtual port driver VPD2, and emulates the communication port used by the device driver DD1 for the device driver DD1.

The device driver DD1 then converts the received print start acknowledgement to the data format used by the application program AP and relays the acknowledgement to the application program (step S18).

The application program AP that received the print start acknowledgement from the device driver DD1 then sends the print data that is required to print, including the printing control commands and the actual print data, to the device driver DD1 (step S19).

As a result, the device driver DD1 converts the print data to the protocol of the communication port (such as the LPT port) addressed by the application program and relays the print data to the virtual port driver VPD1 (step S20).

The virtual port driver VPD1 to which the print data was relayed then converts the relayed print data to the protocol of the communication port addressed by the device driver DD2 (such as e.g. a USB port), and then relays the print data through the virtual port communication module 46 to the virtual port driver VPD2 (step S21). The virtual port driver VPD1 thus emulates the communication port used by the device driver DD1 for the device driver DD1, and emulates the device driver DD2 for the virtual port driver VPD2.

The virtual port driver VPD2 then converts the relayed print data to the communication protocol of the communication port COM1 through the COM port communication module, and outputs to the communication port COM1. As a result, the print data is relayed to the printer 11 through the communication port COM1, connector C1, communication cable, and connector C2 (step S22). The virtual port driver VPD2 thus emulates the communication port COM1 for the virtual port driver VPD1, and emulates the device driver DD2 for the communication port COM1.

As a result, the printer 11 interprets the printing control commands and print data contained in the relayed printing data, and executes the printing process (step S23).

In this embodiment of the invention as described above, when one virtual port driver tries to communicate through a communication port that is occupied by another virtual port driver in a communication environment in which a plurality of virtual port drivers use a single communication port, the one virtual port driver emulates the device driver to which the other virtual port driver corresponds when communicating with the other virtual port driver that is occupying the communication port so that communication with a controlled device connected through that communication port is possible.

When a virtual port driver VPD1 is installed and there is already another virtual port driver VPD2 occupying the communication port COM1, the foregoing embodiment describes the one virtual port driver VPD1 as thereafter communicating with the communication port COM1 through the other virtual port driver VPD2.

Alternatively, however, a configuration in which the virtual port driver VPD1, which is one virtual port driver, executes a communication request process through the COM port communication module 41 to access the communication port COM1 after the virtual port driver VPD1 is installed is also conceivable. In embodiments of the invention, if a response to this communication request process is then not received from the communication port COM1, it is determines that the virtual port driver VPD2, which is another virtual port driver, is occupying the communication port COM1, and the virtual port driver VPD1 goes to a communication process in which the one virtual port driver VPD1 emulates the device driver (device driver DD2 in this embodiment of the invention) to which virtual port driver VPD2 (the other virtual port driver) corresponds.

The foregoing embodiment is described as using communication port COM1 as the communication port for communication, but the invention is obviously not so limited and can also be applied to other types of communication ports, including an LPT port, USB port, Ethernet (R) port, or wireless port, for example.

Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims, unless they depart therefrom.

## Claims

1. A communication control method for a control device (12),
the control device (12) comprising a plurality of device driver means (DD1, DD2) and a plurality of virtual port driver means (VPD1, VPD2), and a first communication port (COM1) as a physical communication port using a first communication protocol, and each of the plurality of device driver means (DD1, DD2) communicating with a respective one of the plurality of virtual port driver means (VPD1, VPD2) using a respective communication protocol, and
the control device (12) being configured to communicate with a controlled device (11) being connected to the first communication port (COM1) through the virtual port driver means (VPD1, VPD2) and the first communication port (COM1),
the communication control method comprises a step of executing a communication process in which a first virtual port driver means (VPD1) emulates a second communication port by using a second communication protocol in communication with a respective first device driver means (DD1); and,
the method further comprises, when at least a second virtual port driver means (VPD2), which emulates a third communication port using a third communication protocol in communication with a respective second device driver means (DD2), and converts from the third communication protocol to the first communication protocol in communication with the first communication port (COM1), occupies the first communication port (COM1), a step of executing a communication process in which the first virtual port driver means (VPD1) emulates in communication with the second virtual port driver means (VPD2) the second device driver means (DD2) by converting from the second communication protocol to the third communication protocol in communication with the second virtual port driver means (VPD2).

2. The communication control method described in claim 1, further comprising:
a step of executing a communication process in which the first virtual port driver means (VPD1) comprises a virtual port communication module means (46) for communicating with the second virtual port driver means (VPD2) and for emulating the second device driver means (DD2) corresponding to the second virtual port driver means (VPD2) through the virtual port communication module means (46) In communication with the second virtual port driver means (VPD2).

3. The communication control method described in claim 1 or 2, further comprising:
a step of processing a communication request to the communication port (COM1) from the first virtual port driver means (VPD1); and
a step of executing a communication process, when a response permitting communication through the communication port (COM1) is not received in response to the communication request process, for determining that the second virtual port driver means (VPD2) occupies the communication port (COM1) and emulating the second device driver means (DD2) to which the second virtual port driver means (VPD2) corresponds.

4. A control program for controlling by means of a computer a control device (12) comprising a plurality of device driver means (DD1, DD2) and a plurality of virtual port driver means (VPD1, VPD2), and a first communication port (COM1) as a physical communication port using a first communication protocol, and each of the plurality of device driver means (DD1, DD2) communicating with a respective one of the plurality of virtual port driver means (VPD1, VPD2) using a respective communication protocol, and the control device (12) being configured to communicate with a controlled device (11) being connected to the first communication port (COM1) through the virtual port driver means (VPD1, VPD2) and the first communication port (COM1),
the control program being adapted to cause the computer to function asa means of causing a first virtual port driver means (VPD1) to execute a communication process in which the first virtual port driver means (VPD1) emulates a second communication port by using a second communication protocol in communication with a respective first device driver means (DD1); and
the control program being adapted to cause the computer to further function. when at least a second virtual port driver means (VPD2), which emulates a third communication port using a third communication protocol in communication with a respective second device driver means (DD2), and converts from the third communication protocol to the first communication protocol in communication with the first communication port (COM1), occupies the first communication port (COM1), as a means of executing a communication process in which the first virtual port driver means (VPD1) emulates in communication with the second virtual port driver means (VPD2) the second device driver means (DD2) by converting from the second communication protocol to the third communication protocol in communication with the second virtual port driver means (VPD2).

5. The control program described in claim 4, wherein the control program causes the computer to operate as:
a means of executing a communication process wherein the first virtual port driver means (VPD1) comprises a virtual port communication module means (46) for communicating with the second virtual port driver means (VPD2) and for emulating the second device driver means (DD2) corresponding to the second virtual port driver means (VPD2) through the virtual port communication module means (46) In communication with the second virtual port driver means (VPD2).

6. A communication control system for controlling communication of a control device (12) being configured to communicate with a controlled device (11) being connected to a first communication port (COM1) through a plurality of virtual port driver means (VPD1, VPD2) and the first communication port (COM1),
the communication control system comprising:
- a plurality of device driver means (DD1, DD2),
- a plurality of virtual port driver means (VPD1, VPD2), and
- the first communication port (COM1) as a physical communication port using a first communication protocol,
wherein each of the plurality of device driver means (DD1, DD2) communicates with a respective one of the plurality of virtual port driver means (VPD1, VPD2) using a respective communication protocol,
wherein a first virtual port driver means (VPD1) is configured to emulate a second communication port by using a second communication protocol in communication with a respective first device driver means (DD1); and
wherein the first virtual port driver means (VPD1) is further configured to emulate in communication with a second virtual port driver means (VPD2) a second device driver means (DD2) by converting from the second communication protocol to the third communication protocol in communication with the second virtual port driver means (VPD2), when at least the second virtual port driver means (VPD2), which emulates a third communication port using a third communication protocol in communication with the respective second device driver means (DD2), and converts from the third communication protocol to the first communication protocol in communication with the first communication port (COM1), occupies the first communication port (COM1).

7. The communication control system described in claim 6, wherein the first virtual port driver means (VPD1) comprises a virtual port communication module means (46) for communicating with the second virtual port driver means (VPD2) and for emulating the second device driver means (DD2) corresponding to the second virtual port driver means (VPD2) through the virtual port communication module means (46) in communication with the second virtual port driver means (VPD2).

8. The communication control system described in claim 6 or 7, wherein
the first virtual port driver means (VPD1) is configured to process a communication request to the communication port (COM1); and
the first virtual port driver means (VPD1) is configured to determine that the second virtual port driver (VPD2) occupies the communication port (COM1), when a response permitting communication through the communication port (COM1) is not received in response to the communication request process, and to emulate the second device driver means (DD2) to which the second virtual port driver means (VPD2) corresponds.

9. The communication control system described in at least one of claims 6 to 8, wherein the control device is a POS terminal (12) and the controlled device is a printer (11).

10. A POS system comprising:
- a POS terminal (12), and
- a printer (11),
wherein the printer (11) is connected to the POS terminal (12) through a first communication port (COM1) of the POS terminal (12), and
wherein the POS terminal (12) comprises a communication control system according to at least one of claims 6 to 9, the POS terminal (12) being the control device and the printer (11) being the controlled device.

## Patentansprüche

1. Kommunikationssteuerungsverfahren für eine Steuerungsvorrichtung (12),
wobei die Steuerungsvorrichtung (12) eine Vielzahl von Vorrichtungstreibermitteln (DD1, DD2) und eine Vielzahl von virtuellen Anschlusstreibermitteln (VPD1, VPD2) und einen ersten Kommunikationsanschluss (COM1) als physischen Kommunikationsanschluss, der ein erstes Kommunikationsprotokoll verwendet, umfasst, und jedes der Vielzahl von Vorrichtungstreibermitteln (DD1, DD2) mit einem jeweiligen der Vielzahl von virtuellen Anschlusstreibermitteln (VPD1, VPD2) unter Verwendung eines jeweiligen Kommunikationsprotokolls kommuniziert, und
die Steuerungsvorrichtung (12) konfiguriert ist, um mit einer gesteuerten Vorrichtung (11), die mit dem ersten Kommunikationsanschluss (COM1) verbunden ist, über die virtuellen Anschlusstreibermittel (VPD1, VPD2) und den ersten Kommunikationsanschluss (COM1) zu kommunizieren,
wobei das Kommunikationssteuerungsverfahren einen Schritt des Ausführens eines Kommunikationsprozesses umfasst, bei dem ein erstes virtuelles Anschlusstreibermittel (VPD1) unter Verwendung eines zweiten Kommunikationsprotokolls in Kommunikation mit einem jeweiligen ersten Vorrichtungstreibermittel (DD1) einen zweiten Kommunikationsanschluss emuliert; und
wenn mindestens ein zweites virtuelles Anschlusstreibermittel (VPD2), das einen dritten Kommunikationsanschluss unter Verwendung eines dritten Kommunikationsprotokolls in Kommunikation mit einem jeweiligen zweiten Vorrichtungstreibermittel (DD2) emuliert und von dem dritten Kommunikationsprotokoll in das erste Kommunikationsprotokoll in Kommunikation mit dem ersten Kommunikationsanschluss (COM1) konvertiert, den ersten Kommunikationsanschluss (COM1) belegt, das Verfahren ferner einen Schritt des Ausführens eines Kommunikationsprozesses umfasst, bei dem das erste virtuelle Anschlusstreibermittel (VPD1) in Kommunikation mit dem zweiten virtuellen Anschlusstreibermittel (VPD2) das zweite Vorrichtungstreibermittel (DD2) durch Konvertieren von dem zweiten Kommunikationsprotokoll in das dritte Kommunikationsprotokoll in Kommunikation mit dem zweiten virtuellen Anschlusstreibermittel (VPD2) emuliert.

2. Kommunikationssteuerungsverfahren nach Anspruch 1, ferner umfassend:
einen Schritt des Ausführens eines Kommunikationsprozesses, bei dem das erste virtuelle Anschlusstreibermittel (VPD1) ein Kommunikationsmodulmittel (46) eines virtuellen Anschlusses umfasst, um mit dem zweiten virtuellen Anschlusstreibermittel (VPD2) zu kommunizieren und das zweite Vorrichtungstreibermittel (DD2), das dem zweiten virtuellen Anschlusstreibermittel (VPD2) entspricht, durch das Kommunikationsmodulmittel (46) des virtuellen Anschlusses in Kommunikation mit dem zweiten virtuellen Anschlusstreibermittel (VPD2) zu emulieren.

3. Kommunikationssteuerungsverfahren nach Anspruch 1 oder 2, ferner umfassend:
einen Schritt des Verarbeitens einer Kommunikationsanfrage an den Kommunikationsanschluss (COM1) von dem ersten virtuellen Anschlusstreibermittel (VPD1); und
einen Schritt des Ausführens eines Kommunikationsprozesses, wenn keine Antwort, die eine Kommunikation über den Kommunikationsanschluss (COM1) erlaubt, als Reaktion auf den Kommunikationsanfrageprozess empfangen wird, um zu bestimmen, dass das zweite virtuelle Anschlusstreibermittel (VPD2) den Kommunikationsanschluss (COM1) belegt, und des Emulierens des zweiten Vorrichtungstreibermittels (DD2), dem das zweite virtuelle Anschlusstreibermittel (VPD2) entspricht.

4. Steuerungsprogramm zum Steuern anhand eines Computers einer Steuerungsvorrichtung (12), die eine Vielzahl von Vorrichtungstreibermitteln (DD1, DD2) und eine Vielzahl von virtuellen Anschlusstreibermitteln (VPD1, VPD2) und einen ersten Kommunikationsanschluss (COM1) als physischen Kommunikationsanschluss unter Verwendung eines ersten Kommunikationsprotokolls umfasst, und wobei jedes der Vielzahl von Vorrichtungstreibermitteln (DD1, DD2), das mit einem jeweiligen der Vielzahl von virtuellen Anschlusstreibermitteln (VPD1, VPD2) unter Verwendung eines jeweiligen Kommunikationsprotokolls kommuniziert, und wobei die Steuerungsvorrichtung (12) konfiguriert ist, um mit einer gesteuerten Vorrichtung (11) zu kommunizieren, die mit dem ersten Kommunikationsanschluss (COM1) über die virtuellen Anschlusstreibermittel (VPD1, VPD2) und den ersten Kommunikationsanschluss (COM1) verbunden ist,
wobei das Steuerungsprogramm geeignet ist, um zu bewirken, dass der Computer als Mittel funktioniert, um zu bewirken, dass ein erstes virtuelles Anschlusstreibermittel (VPD1) einen Kommunikationsprozess ausführt, bei dem das erste virtuelle Anschlusstreibermittel (VPD1) einen zweiten Kommunikationsanschluss unter Verwendung eines zweiten Kommunikationsprotokolls in Kommunikation mit einem jeweiligen ersten Vorrichtungstreibermittel (DD1) emuliert; und
wobei das Steuerungsprogramm geeignet ist, um zu bewirken, dass der Computer ferner, wenn mindestens ein zweites virtuelles Anschlusstreibermittel (VPD2), das einen dritten Kommunikationsanschluss unter Verwendung eines dritten Kommunikationsprotokolls in Kommunikation mit einem jeweiligen zweiten Vorrichtungstreibermittel (DD2) emuliert und von dem dritten Kommunikationsprotokoll in das erste Kommunikationsprotokoll in Kommunikation mit dem ersten Kommunikationsanschluss (COM1) konvertiert, den ersten Kommunikationsanschluss (COM1) belegt, als Mittel zum Ausführen eines Kommunikationsprozesses funktioniert, bei dem das erste virtuelle Anschlusstreibermittel (VPD1) in Kommunikation mit dem zweiten virtuellen Anschlusstreibermittel (VPD2) das zweite Vorrichtungstreibermittel (DD2) durch Konvertieren von dem zweiten Kommunikationsprotokoll in das dritte Kommunikationsprotokoll in Kommunikation mit dem zweiten virtuellen Anschlusstreibermittel (VPD2) emuliert.

5. Steuerungsprogramm nach Anspruch 4, wobei das Steuerungsprogramm bewirkt, dass der Computer funktioniert als:
Mittel zum Ausführen eines Kommunikationsprozesses, wobei das erste virtuelle Anschlusstreibermittel (VPD1) ein Kommunikationsmodulmittel (46) eines virtuellen Anschlusses zum Kommunizieren mit dem zweiten virtuellen Anschlusstreibermittel (VPD2) und zum Emulieren des zweiten Vorrichtungstreibermittels (DD2), das dem zweiten virtuellen Anschlusstreibermittel (VPD2) entspricht, durch das Kommunikationsmodulmittel (46) eines virtuellen Anschlusses in Kommunikation mit dem zweiten virtuellen Anschlusstreibermittel (VPD2) umfasst.

6. Kommunikationssteuerungssystem zum Steuern der Kommunikation einer Steuerungsvorrichtung (12), die konfiguriert ist, um mit einer gesteuerten Vorrichtung (11) zu kommunizieren, die mit einem ersten Kommunikationsanschluss (COM1) über eine Vielzahl von virtuellen Anschlusstreibermitteln (VPD1, VPD2) und den ersten Kommunikationsanschluss (COM1) verbunden ist,
wobei das Kommunikationssteuerungssystem Folgendes umfasst:
- eine Vielzahl von Vorrichtungstreibermitteln (DD1, DD2),
- eine Vielzahl von virtuellen Anschlusstreibermitteln (VPD1, VPD2), und
- den ersten Kommunikationsanschluss (COM1) als physischen Kommunikationsanschluss, der ein erstes Kommunikationsprotokoll verwendet,
wobei jedes von der Vielzahl von Vorrichtungstreibermitteln (DD1, DD2) mit einem jeweiligen der Vielzahl von virtuellen Anschlusstreibermitteln (VPD1, VPD2) unter Verwendung eines jeweiligen Kommunikationsprotokolls kommuniziert,
wobei ein erstes virtuelles Anschlusstreibermittel (VPD1) konfiguriert ist, um einen zweiten Kommunikationsanschluss unter Verwendung eines zweiten Kommunikationsprotokolls in Kommunikation mit einem jeweiligen ersten Vorrichtungstreibermittel (DD1) zu emulieren; und
wobei das erste virtuelle Anschlusstreibermittel (VPD1) ferner konfiguriert ist, um in Kommunikation mit einem zweiten virtuellen Anschlusstreibermittel (VPD2) ein zweites Vorrichtungstreibermittel (DD2) durch Konvertieren von dem zweiten Kommunikationsprotokoll in das dritte Kommunikationsprotokoll in Kommunikation mit dem zweiten virtuellen Anschlusstreibermittel (VPD2) zu emulieren, wenn mindestens das zweite virtuelle Anschlusstreibermittel (VPD2), welches einen dritten Kommunikationsanschluss unter Verwendung eines dritten Kommunikationsprotokolls in Kommunikation mit dem jeweiligen zweiten Vorrichtungstreibermittel (DD2) emuliert und von dem dritten Kommunikationsprotokoll in das erste Kommunikationsprotokoll in Kommunikation mit dem ersten Kommunikationsanschluss (COM1) konvertiert, den ersten Kommunikationsanschluss (COM1) belegt.

7. Kommunikationssteuerungssystem nach Anspruch 6, wobei das erste virtuelle Anschlusstreibermittel (VPD1) ein Kommunikationsmodulmittel (46) eines virtuellen Anschlusses zum Kommunizieren mit dem zweiten virtuellen Anschlusstreibermittel (VPD2) und zum Emulieren des zweiten Vorrichtungstreibermittels (DD2), das dem zweiten virtuellen Anschlusstreibermittel (VPD2) entspricht, über das Kommunikationsmodulmittel (46) eines virtuellen Anschlusses in Kommunikation mit dem zweiten virtuellen Anschlusstreibermittel (VPD2) umfasst.

8. Kommunikationssteuerungssystem nach Anspruch 6 oder 7, wobei
das erste virtuelle Anschlusstreibermittel (VPD1) konfiguriert ist, um eine Kommunikationsanfrage an den Kommunikationsanschluss (COM1) zu verarbeiten; und
das erste virtuelle Anschlusstreibermittel (VPD1) konfiguriert ist, um zu bestimmen, dass der zweite virtuelle Anschlusstreiber (VPD2) den Kommunikationsanschluss (COM1) belegt, wenn keine Antwort, die eine Kommunikation über den Kommunikationsanschluss (COM1) erlaubt, als Reaktion auf den Kommunikationsanfrageprozess empfangen wird, und um das zweite Vorrichtungstreibermittel (DD2), dem das zweite virtuelle Anschlusstreibermittel (VPD2) entspricht, zu emulieren.

9. Kommunikationssteuerungssystem nach mindestens einem der Ansprüche 6 bis 8, wobei die Steuerungsvorrichtung ein POS-Endgerät (12) ist und die gesteuerte Vorrichtung ein Drucker (11) ist.

10. POS-System, umfassend:
- ein POS-Endgerät (12) und
- einen Drucker (11),
wobei der Drucker (11) an das POS-Endgerät (12) über einen ersten Kommunikationsanschluss (COM1) des POS-Endgeräts (12) angeschlossen ist, und
wobei das POS-Endgerät (12) ein Kommunikationssteuerungssystem nach mindestens einem von Anspruch 6 bis 9 umfasst, wobei das POS-Endgerät (12) die Steuerungsvorrichtung ist und der Drucker (11) die gesteuerte Vorrichtung ist.

## Revendications

1. Procédé de commande de communication pour un dispositif de commande (12),
le dispositif de commande (12) comprenant une pluralité de moyens de pilotage de dispositif (DD1, DD2) et une pluralité de moyens de pilotage de port virtuel (VPD1, VPD2), et un premier port de communication (COM1) en tant que port de communication physique utilisant un premier protocole de communication, et chacun de la pluralité de moyens de pilotage de dispositif (DD1, DD2) communiquant avec l'un respectif de la pluralité de moyens de pilotage de port virtuel (VPD1, VPD2) en utilisant un protocole de communication respectif, et
le dispositif de commande (12) étant configuré pour communiquer avec un dispositif commandé (11) qui est connecté au premier port de communication (COM1) par l'intermédiaire des moyens de pilotage de port virtuel (VPD1, VPD2) et du premier port de communication (COM1),
le procédé de commande de communication comprend une étape consistant à exécuter un processus de communication dans lequel un premier moyen de pilotage de port virtuel (VPD1) émule un second port de communication par utilisation d'un second protocole de communication en communication avec un premier moyen de pilotage de dispositif respectif (DD1) ; et,
le procédé comprend en outre, lorsqu'au moins un second moyen de pilotage de port virtuel (VPD2), qui émule un troisième port de communication en utilisant un troisième protocole de communication en communication avec un second moyen de pilotage de dispositif respectif (DD2), et réalise une conversion du troisième protocole de communication au premier protocole de communication en communication avec le premier port de communication (COM1), occupe le premier port de communication (COM1), une étape consistant à exécuter un processus de communication dans lequel le premier moyen de pilotage de port virtuel (VPD1) émule en communication avec le second moyen de pilotage de port virtuel (VPD2) le second moyen de pilotage de dispositif (DD2) par conversion du second protocole de communication au troisième protocole de communication en communication avec le second moyen de pilotage de port virtuel (VPD2).

2. Procédé de commande de communication décrit à la revendication 1, comprenant en outre :
une étape consistant à exécuter un processus de communication dans lequel le premier moyen de pilotage de port virtuel (VPD1) comprend un moyen de module de communication de port virtuel (46) pour communiquer avec le second moyen de pilotage de port virtuel (VPD2) et pour émuler le second moyen de pilotage de dispositif (DD2) correspondant au second moyen de pilotage de port virtuel (VPD2) par l'intermédiaire du moyen de module de communication de port virtuel (46) en communication avec le second moyen de pilotage de port virtuel (VPD2).

3. Procédé de commande de communication décrit à la revendication 1 ou 2, comprenant en outre :
une étape consistant à traiter une requête de communication vers le port de communication (COM1) en provenance du premier moyen de pilotage de port virtuel (VPD1) ; et
une étape consistant à exécuter un processus de communication, lorsqu'une réponse autorisant une communication à travers le port de communication (COM1) n'est pas reçue en réponse au processus de requête de communication, pour déterminer que le second moyen de pilotage de port virtuel (VPD2) occupe le port de communication (COM1) et émuler le second moyen de pilotage de dispositif (DD2) auquel le second moyen de pilotage de port virtuel (VPD2) correspond.

4. Programme de commande pour commander au moyen d'un ordinateur un dispositif de commande (12) comprenant une pluralité de moyens de pilotage de dispositif (DD1, DD2) et une pluralité de moyens de pilotage de port virtuel (VPD1, VPD2), et un premier port de communication (COM1) en tant que port de communication physique utilisant un premier protocole de communication, et chacun de la pluralité de moyens de pilotage de dispositif (DD1, DD2) communiquant avec l'un respectif de la pluralité de moyens de pilotage de port virtuel (VPD1, VPD2) en utilisant un protocole de communication respectif, et le dispositif de commande (12) étant configuré pour communiquer avec un dispositif commandé (11) qui est connecté au premier port de communication (COM1) par l'intermédiaire des moyens de pilotage de port virtuel (VPD1, VPD2) et du premier port de communication (COM1),
le programme de commande étant conçu pour amener l'ordinateur à fonctionner comme un moyen pour amener un premier moyen de pilotage de port virtuel (VPD1) à exécuter un processus de communication dans lequel le premier moyen de pilotage de port virtuel (VPD1) émule un second port de communication par utilisation d'un second protocole de communication en communication avec un premier moyen de pilotage de dispositif respectif (DD1) ; et
le programme de commande étant conçu pour amener l'ordinateur à fonctionner en outre, lorsqu'au moins un second moyen de pilotage de port virtuel (VPD2), qui émule un troisième port de communication en utilisant un troisième protocole de communication en communication avec un second moyen de pilotage de dispositif respectif (DD2), et réalise une conversion du troisième protocole de communication au premier protocole de communication en communication avec le premier port de communication (COM1), occupe le premier port de communication (COM1), comme un moyen pour exécuter un processus de communication dans lequel le premier moyen de pilotage de port virtuel (VPD1) émule en communication avec le second moyen de pilotage de port virtuel (VPD2) le second moyen de pilotage de dispositif (DD2) par conversion du second protocole de communication au troisième protocole de communication en communication avec le second moyen de pilotage de port virtuel (VPD2).

5. Programme de commande décrit à la revendication 4, dans lequel le programme de commande amène l'ordinateur à fonctionner comme :
un moyen pour exécuter un processus de communication dans lequel le premier moyen de pilotage de port virtuel (VPD1) comprend un moyen de module de communication de port virtuel (46) pour communiquer avec le second moyen de pilotage de port virtuel (VPD2) et pour émuler le second moyen de pilotage de dispositif (DD2) correspondant au second moyen de pilotage de port virtuel (VPD2) par l'intermédiaire du moyen de module de communication de port virtuel (46) en communication avec le second moyen de pilotage de port virtuel (VPD2).

6. Système de commande de communication pour commander la communication d'un dispositif de commande (12) qui est configuré pour communiquer avec un dispositif commandé (11) qui est connecté à un premier port de communication (COM1) par l'intermédiaire d'une pluralité de moyens de pilotage de port virtuel (VPD1, VPD2) et du premier port de communication (COM1),
le système de commande de communication comprenant :
- une pluralité de moyens de pilotage de dispositif (DD1, DD2),
- une pluralité de moyens de pilotage de port virtuel (VPD1, VPD2), et
- le premier port de communication (COM1) en tant que port de communication physique utilisant un premier protocole de communication,
dans lequel chacun de la pluralité de moyens de pilotage de dispositif (DD1, DD2) communique avec l'un respectif de la pluralité de moyens de pilotage de port virtuel (VPD1, VPD2) en utilisant un protocole de communication respectif,
dans lequel un premier moyen de pilotage de port virtuel (VPD1) est configuré pour émuler un second protocole de communication par utilisation d'un second protocole de communication en communication avec un premier moyen de pilotage de dispositif respectif (DD1) ; et
dans lequel le premier moyen de pilotage de port virtuel (VPD1) est en outre configuré pour émuler en communication avec un second moyen de pilotage de port virtuel (VPD2) un second moyen de pilotage de dispositif (DD2) par conversion du second protocole de communication au troisième protocole de communication en communication avec le second moyen de pilotage de port virtuel (VPD2), lorsqu'au moins le second moyen de pilotage de port virtuel (VPD2), qui émule un troisième port de communication en utilisant un troisième protocole de communication en communication avec le second moyen de pilotage de dispositif respectif (DD2), et réalise une conversion du troisième protocole de communication au premier protocole de communication en communication avec le premier port de communication (COM1), occupe le premier port de communication (COM1).

7. Système de commande de communication décrit à la revendication 6, dans lequel le premier moyen de pilotage de port virtuel (VPD1) comprend un moyen de module de communication de port virtuel (46) pour communiquer avec le second moyen de pilotage de port virtuel (VPD2) et pour émuler le second moyen de pilotage de dispositif (DD2) correspondant au second moyen de pilotage de port virtuel (VPD2) par l'intermédiaire du moyen de module de communication de port virtuel (46) en communication avec le second moyen de pilotage de port virtuel (VPD2).

8. Système de commande de communication décrit à la revendication 6 ou 7, dans lequel
le premier moyen de pilotage de port virtuel (VPD1) est configuré pour traiter une requête de communication vers le premier port de communication (COM1) ; et
le premier moyen de pilotage de port virtuel (VPD1) est configuré pour déterminer que le second moyen de pilotage de port virtuel (VPD2) occupe le port de communication (COM1), lorsqu'une réponse permettant une communication à travers le port de communication (COM1) n'est pas reçue en réponse au processus de requête de communication, et pour émuler le second moyen de pilotage de dispositif (DD2) auquel le second moyen de pilotage de port virtuel (VPD2) correspond.

9. Système de commande de communication décrit à au moins l'une des revendications 6 à 8, dans lequel le dispositif de commande est un terminal POS (12) et le dispositif commandé est une imprimante (11).

10. Système POS comprenant :
- un terminal POS (12), et
- une imprimante (11),
dans lequel l'imprimante (11) est connectée au terminal POS (12) par l'intermédiaire d'un premier port de communication (COM1) du terminal POS (12), et
dans lequel le terminal POS (12) comprend un système de commande de communication selon au moins l'une des revendications 6 à 9, le terminal POS (12) étant le dispositif de commande et l'imprimante (11) étant le dispositif commandé.
